# FASCICULE DE BREVET EUROPEEN

(11) **EP 2 252 772 B1**
(45) Date de publication et mention de la délivrance du brevet: **07.08.2013**
(21) Numéro de dépôt: 09729986.1
(22) Date de dépôt: 17.03.2009
(51) Int. Cl.: F01D 9/04, F01D 11/00, F01D 9/00

(54) **DISTRIBUTEUR SECTORISÉ POUR UNE TURBOMACHINE**
SEGMENTIERTER LEITSCHAUFELRING FÜR EINE TURBOMASCHINE
SECTORED GUIDE VANE RING FOR TURBOMACHINE

(30) Priorité: 19.03.2008 FR 0801499
(43) Date de publication de la demande: 24.11.2010
(73) Titulaire: SNECMA, 75724 Paris Cedex 15 (FR)
(72) Inventeur: BARIAUD, Christian, Bernard, F-91400 Orsay (FR); DIGARD BROU DE CUISSART, Sébastien, F-75020 Paris (FR); HERZER, Eric, René, F-78800 HOUILLES (FR); RICHARD, Bruno, Marie, Benjamin, Jacques, F-78570 Chanteloup Les Vignes (FR)
(74) Mandataire: Ramey, Daniel
(86) Numéro de dépôt international: PCT/FR2009/000277
(87) Numéro de publication internationale: WO 2009/125078

(56) Documents cités:
- EP-A- 0 146 449
- GB-A- 2 198 489
- US-A- 5 062 767

## Description

La présente invention concerne un distributeur sectorisé pour une turbomachine telle qu'un turboréacteur ou un turbopropulseur d'avion.

Le document EP-A-146449 décrit des stators à ailettes à calage variable de compresseurs de turbomachine.

Une turbomachine comprend des étages de turbine comportant chacun une roue de rotor à aubes et un distributeur, chaque distributeur étant sectorisé, c'est-à-dire formé de plusieurs secteurs de distributeur disposés circonférentiellement bout à bout.

Chaque secteur de distributeur comporte deux plates-formes annulaires coaxiales s'étendant l'une à l'intérieur de l'autre et reliées entre elles par des pales sensiblement radiales. La plate-forme externe comporte des moyens d'accrochage sur un carter externe de la turbine. La plate-forme interne est solidaire d'une cloison annulaire sensiblement radiale qui porte des éléments en matériau abradable, situés radialement à l'intérieur de la plate-forme interne du distributeur. Les éléments en matériau abradable coopèrent avec des léchettes annulaires portées par le rotor de la turbine pour former des joints d'étanchéité du type à labyrinthe.

En cas d'usure importante des éléments en matériau abradable, il est nécessaire de les remplacer par des neufs lors d'une opération de maintenance. Dans la technique actuelle, ces éléments sont fixés par brasage sur la cloison annulaire de la plate-forme interne du distributeur. Le remplacement des éléments en matériau abradable nécessite un démontage complet des secteurs du distributeur, un usinage de chaque secteur de distributeur pour enlever les éléments abradables usés, et le brasage d'éléments abradables neufs sur la cloison annulaire. Il est ensuite nécessaire de déposer un revêtement anti-oxydation sur chaque secteur de distributeur. Cette opération de remplacement des éléments abradables d'un distributeur est donc longue et coûteuse.

Par ailleurs, les secteurs de distributeur sont séparés les uns des autres par de faibles jeux en direction circonférentielle pour autoriser des dilatations thermiques de leurs plates-formes en fonctionnement. Ils sont de plus soumis en fonctionnement à des vibrations et à des sollicitations dynamiques relativement importantes qui peuvent entraîner des déplacements parasites et des déformations de ces secteurs.

On a déjà proposé de rigidifier le distributeur à l'aide de moyens d'appui axial formés sur les secteurs de plate-forme interne du distributeur, les moyens d'appui d'un secteur de plate-forme étant destinés à coopérer avec des moyens correspondants formés sur des secteurs de plate-forme interne adjacents pour limiter les déformations du distributeur en fonctionnement.

Dans la technique actuelle, ces moyens d'appui comportent un matériau très dur appelé « stellite » qui est déposé par un procédé de soudage laser (« stellitage ») long, coûteux, difficile à mettre en oeuvre, et qui risque de détériorer les secteurs de distributeur. Cette technologie n'est en outre pas réalisable sur certains distributeurs dont les plates-formes ont des formes trop complexes (appelées plates-formes 3D).

La présente invention a notamment pour but d'apporter une solution simple, efficace et économique aux problèmes de la technique antérieure, en simplifiant le remplacement des éléments en matériau abradable du distributeur, et en supprimant le stellitage des secteurs de ce distributeur.

Elle propose à cet effet un distributeur sectorisé pour une turbomachine, formé de secteurs comprenant deux plates-formes annulaires coaxiales, respectivement interne et externe, reliées entre elles par des pales sensiblement radiales, la plate-forme interne étant solidaire d'une cloison annulaire sensiblement radiale portant des éléments en matériau abradable, caractérisé en ce que les éléments en matériau abradable sont fixés sur un support annulaire sectorisé qui comporte une gorge annulaire débouchant radialement vers l'extérieur et dans laquelle est engagée et retenue en direction radiale la périphérie interne de la cloison annulaire, chaque secteur de support comportant à une de ses extrémités circonférentielles une ouverture d'engagement et de montage sur la cloison annulaire d'un ou de plusieurs secteurs de distributeur, le montage étant réalisé en déplaçant en direction circonférentielle le secteur de support sur cette cloison, et à l'autre de ses extrémités circonférentielles des moyens formant butée en direction circonférentielle et coopérant avec la cloison annulaire du ou d'un des secteurs de distributeur pour assurer la retenue dans un sens en direction circonférentielle de la cloison annulaire par rapport au secteur de support.

De façon simple, la cloison annulaire de la plate-forme interne est reçue dans des moyens d'accrochage prévus sur le support des éléments abradables, qui peut coulisser sur cette cloison. Au contraire de la technique antérieure, le support des éléments abradables est monté de manière amovible sur la cloison, ce qui facilite le remplacement des éléments abradables usés. Il suffit en effet de démonter le support annulaire de la cloison et d'effectuer les opérations d'usinage et de brasage précités directement sur ce support, ou bien de remplacer tout simplement ce support portant des éléments abradables usés par un nouveau support portant des éléments abradables neufs. Le remontage du support sur la cloison est en outre relativement simple et rapide.

L'invention permet également de simplifier la fabrication de chaque secteur de distributeur qui est obtenu de fonderie, car le support des abradables est désormais réalisé indépendamment de ces secteurs.

Le support annulaire quand il s'étend sur plusieurs secteurs de distributeur permet en outre de rigidifier les secteurs de distributeur de manière à limiter leurs vibrations et leurs déplacements parasites en fonctionnement, tout en autorisant leurs dilatations circonférentielles. Il n'est donc plus nécessaire de déposer par stellitage un matériau dur sur les moyens d'appui axial des secteurs de distributeur, ce qui permet de faire l'économie de cette opération longue et coûteuse, et de supprimer le risque de détérioration des secteurs de distributeur lors de cette opération délicate.

Le support annulaire est sectorisé et chaque secteur de support comporte une extrémité circonférentielle une ouverture d'engagement et de montage sur les cloisons des secteurs de distributeur, le montage étant réalisé en déplaçant le secteur de support en direction circonférentielle sur les secteurs de distributeur par coulissement circonférentiel. Chaque secteur de support comporte à son autre extrémité circonférentielle des moyens formant butée en direction circonférentielle et coopérant avec la cloison d'un secteur de distributeur adjacent pour assurer la retenue dans un sens en direction circonférentielle des secteurs de distributeur par rapport au secteur de support.

Selon une autre caractéristique de l'invention, le support est en forme de rail et réalisé en tôle, ce qui permet notamment d'alléger le distributeur de façon significative par rapport à la technique antérieure.

Le support peut avoir en section une forme en U ou en C dont l'ouverture est orientée radialement vers l'extérieur, ce support comportant deux ailes annulaires sensiblement radiales, respectivement amont et aval, reliées entre elles à leurs périphéries internes par une paroi cylindrique interne de support des éléments en matériau abradable. Les éléments abradables peuvent être fixés sur le support par brasage ou par toute autre technique appropriée.

Des déflecteurs annulaires en tôle peuvent en outre être fixés, par exemple par brasage, sur les ailes du support. Ces déflecteurs annulaires sont destinés à coopérer avec des éléments correspondants des roues de rotor situées en amont et en aval du distributeur pour limiter le passage d'air en direction radiale entre le distributeur et ces roues de rotor.

Chaque aile du support peut être pliée à sa périphérie externe pour former une paroi externe sensiblement cylindrique s'étendant axialement vers l'aile opposée, les parois externes définissant entre elles la gorge annulaire de passage de la cloison annulaire d'un secteur de distributeur.

Chaque paroi externe du support peut être pliée du côté de la cloison annulaire pour former un rebord annulaire s'étendant sensiblement radialement vers l'intérieur, ces deux rebords annulaires étant sensiblement parallèles entre eux et à la cloison annulaire du support.

En position de montage, la cloison est serrée entre les parois externes ou entre les rebords annulaires du support, et est serrée radialement entre les parois externes ou les rebords annulaires du support d'une part, et la paroi interne du support d'autre part, ce qui permet notamment de limiter les vibrations du support en fonctionnement.

La cloison comprend de préférence à sa périphérie interne des épaulements circonférentiels formant butée en direction radiale, ces épaulements étant logés entre les ailes du support et coopérant avec les parois externes ou les rebords annulaires du support pour assurer sa retenue radiale sur la cloison.

Le nombre de secteurs de support peut être inférieur au nombre de secteurs de distributeur. Chaque secteur de support peut s'étendre en direction circonférentielle sur une étendue angulaire correspondant à plusieurs secteurs de distributeur. Chaque secteur de support permet dans ce cas de relier et rigidifier plusieurs secteurs de distributeur.

L'invention concerne également une turbine basse-pression de turbomachine, comprenant au moins un distributeur sectorisé du type précité, ainsi qu'une turbomachine, telle qu'un turboréacteur ou un turbopropulseur d'avion, comprenant au moins un distributeur tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique en coupe axiale d'une turbine basse-pression de turbomachine,
- la figure 2 est une vue schématique partielle en perspective d'un secteur de distributeur, selon la technique antérieure à l'invention,
- la figure 3 est une vue schématique en perspective des moyens d'appui axial entre deux secteurs de distributeur adjacents de la technique antérieure,
- la figure 4 est une vue schématique partielle en perspective d'un distributeur sectorisé selon l'invention,
- la figure 5 est une vue à plus grande échelle d'une partie de la figure 4 et représente une extrémité circonférentielle d'un secteur de support selon l'invention,
- la figure 6 est une vue schématique en perspective de l'autre extrémité circonférentielle du secteur de support de la figure 4.

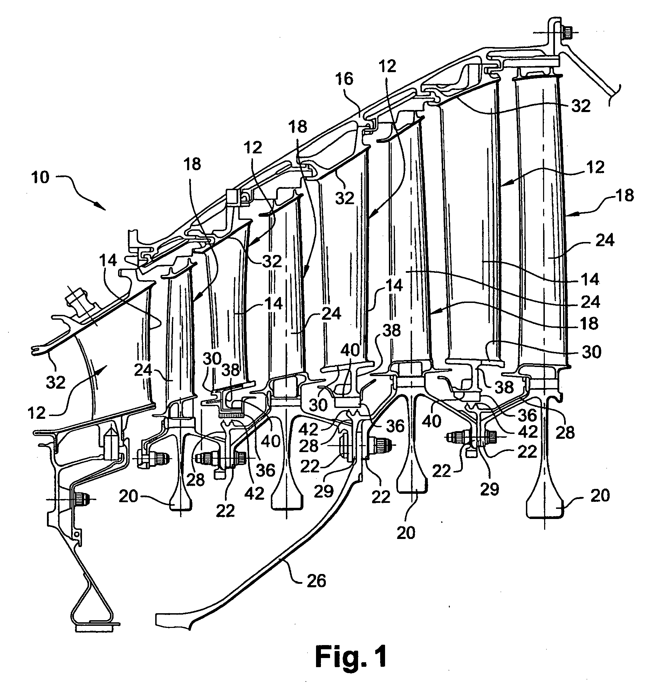

On se réfère d'abord à la figure 1 qui représente une turbine basse-pression 10 de turbomachine comprenant quatre étages comportant chacun un distributeur 12 porté par un carter externe 16 de la turbine et une roue à aubes 18 située en aval du distributeur 12.

Les roues 18 comprennent des disques 20 assemblés coaxialement les uns aux autres par des brides annulaires 22 et portant des aubes 24 sensiblement radiales. Ces roues 18 sont reliées à un arbre de turbine (non représenté) par l'intermédiaire d'un cône d'entraînement 26 fixé sur des brides annulaires 22 des disques.

Des flasques annulaires 28 de retenue axiale des aubes 24 sur les disques 20 sont montés entre les disques et comprennent chacun une paroi radiale interne 29 serrée axialement entre les brides annulaires 22 de deux disques adjacents.

Les distributeurs 12 comprennent chacun deux plates-formes annulaires 30, 32 coaxiales, respectivement interne et externe, qui délimitent entre elles la veine annulaire d'écoulement des gaz dans la turbine et entre lesquelles s'étendent des pales fixes 14 sensiblement radiales. Les plates-formes externes 32 des distributeurs sont accrochées par des moyens appropriés sur le carter externe 16 de la turbine.

La plate-forme interne 30 de chaque distributeur est solidaire d'une cloison annulaire 38 portant des éléments annulaires 36 en matériau abradable, ces éléments 36 étant agencés radialement à l'intérieur de la plate-forme interne 30 du distributeur. Dans l'exemple représenté, la cloison annulaire 38 est sensiblement radiale et sa périphérie externe est reliée à la surface interne de la plate-forme interne 30 du distributeur. Les éléments abradables 36 sont fixés sur la périphérie interne de la cloison annulaire 38.

Les éléments abradables 36 sont agencés radialement à l'extérieur et en regard de léchettes annulaires externes 42 portées par les flasques 28. Les léchettes 42 sont destinées à coopérer par frottement avec les éléments 36 de façon à former des joints à labyrinthe et à limiter le passage d'air en direction axiale à travers ces joints.

Les distributeurs 12 de la turbine sont sectorisés et sont chacun formés de plusieurs secteurs disposés circonférentiellement bout à bout autour de l'axe longitudinal de la turbine.

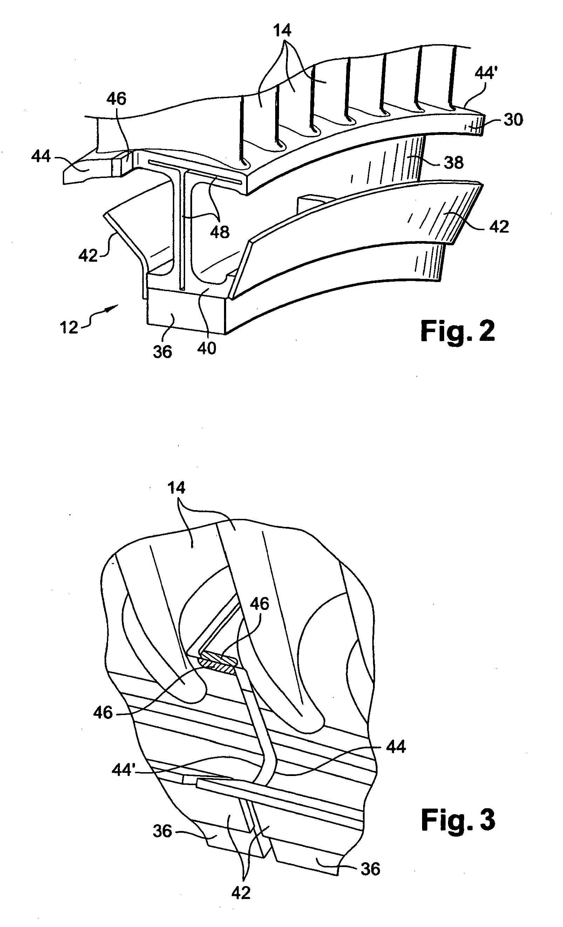

On a représenté en figure 2 une partie d'un secteur de distributeur 12 selon la technique antérieure à la présente invention. Ce secteur de distributeur 12 comprend un secteur de plate-forme interne 30 et un secteur de plate-forme externe (non visible) reliés entre eux par sept pales 14. Le secteur de plate-forme interne 30 est solidaire d'un secteur de cloison 38 portant des éléments abradables 36. Le secteur de plate-forme 30 et le secteur de cloison 38 sont formés d'une seule pièce de fonderie.

Dans la technique actuelle, les éléments abradables 36 sont fixés par brasage sur la périphérie interne du secteur de cloison 38. Des déflecteurs annulaires 42 en tôle sont en outre fixés par brasage sur la périphérie interne du secteur de cloison 38, en amont et en aval des éléments abradables 36. Ces déflecteurs 42 coopèrent par effet de chicane avec des moyens correspondants des roues à aubes 18 situées en amont et en aval du distributeur pour limiter le passage de gaz en direction radiale entre le distributeur et ces roues à aubes.

Le remplacement des éléments abradables 36 est dans ce cas une opération longue et coûteuse, comme cela a été vu dans ce qui précède.

Les bords longitudinaux 44, 44' du secteur de plate-forme interne 30 de chaque secteur de distributeur 12 ont des formes complémentaires des bords longitudinaux correspondants des secteurs de plates-formes internes des secteurs de distributeur adjacents, de façon à ce que les bords longitudinaux s'encastrent circonférentiellement les uns dans les autres au montage de ce distributeur (figure 3).

Dans la technique actuelle, les bords longitudinaux 44, 44' des secteurs de plate-forme interne 30 sont usinés en Z pour définir des moyens 46 d'appui axial entre les secteurs de distributeur 12. L'appui axial d'un secteur de plate-forme interne 30 sur un secteur de plate-forme interne adjacent permet de limiter les déplacements parasites et les vibrations des secteurs de distributeur 12 en fonctionnement de la turbine.

Les moyens d'appui 46 comportent un matériau dur appelé «stellite» déposé par un procédé long, coûteux, et très difficile à mettre en oeuvre, comme cela a également été décrit dans ce qui précède.

Par ailleurs, les bords longitudinaux 44, 44' du secteur de plate-forme 30 et les bords radiaux du secteur de cloison 38 comportent des fentes 48 rectilignes de logement de languettes assurant une étanchéité entre les secteurs de distributeur. Ces fentes 48 sont obtenues lors d'une opération d'usinage relativement longue et délicate, la fente radiale formée sur chaque bord radial du secteur de cloison 38 s'étendant à son extrémité radialement interne jusqu'au voisinage immédiat des éléments abradables 36.

L'invention permet de remédier au moins en partie aux problèmes indiqués ci-dessus grâce à un support annulaire 140 qui est fixé de manière amovible sur la cloison annulaire 138 du distributeur et qui porte les éléments en matériau abradable 136.

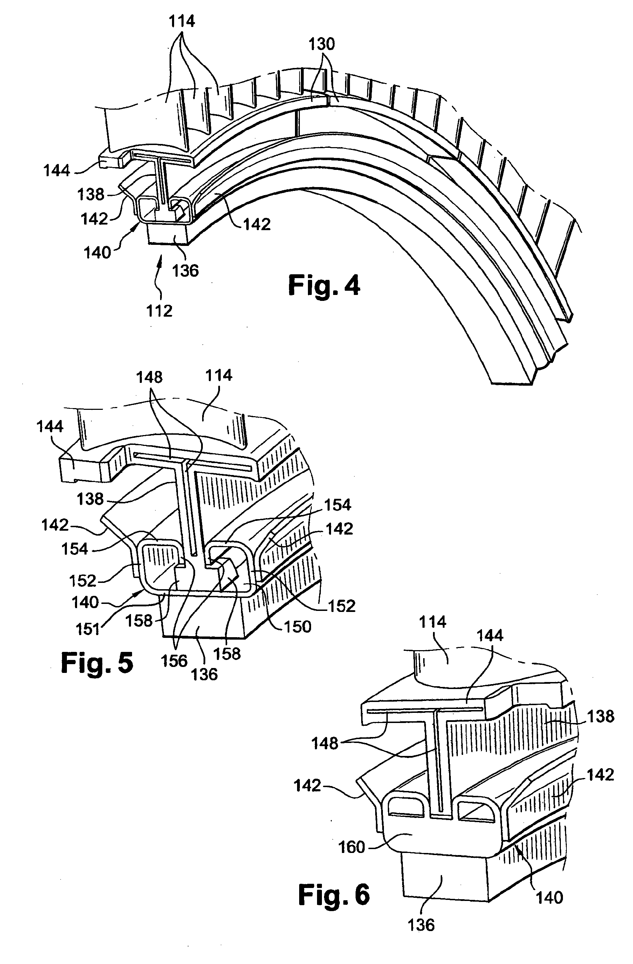

Dans l'exemple de réalisation représenté aux figures 4 à 6, le support annulaire 140 est en forme de rail et est sectorisé, les secteurs de support 140 étant disposés bout à bout. Les secteurs de support 140 sont réalisés en tôle, par exemple en tôle emboutie.

Selon une caractéristique de l'invention, le nombre de secteurs de support 140 est inférieur au nombre de secteurs de distributeur 112. A titre d'exemple, le nombre de secteurs de distributeur 112 est de dix huit et le nombre de secteurs de support est de six, de façon à ce que chaque secteur de support 140 s'étende sur une étendue angulaire correspondant à trois secteurs de distributeur consécutifs. Dans ce cas, chaque secteur de support relie trois secteurs de distributeur consécutifs dont les extrémités circonférentielles peuvent être dépourvues de stellite.

En variante, chaque secteur de support peut rigidifier deux ou quatre secteurs de distributeur 140 consécutifs, voire plus.

Les bords longitudinaux 144, 144' des secteurs de plate-forme interne de chaque distributeur peuvent être conformés en Z, comme dans la technique antérieure, pour conserver les surfaces d'appui axial, ou bien être en coupe droite pour supprimer ces surfaces d'appui axial.

Le support annulaire 140 selon l'invention comporte une gorge annulaire 150 débouchant radialement vers l'extérieur et dans laquelle est engagée et retenue en direction radiale la périphérie interne de la cloison radiale 138. Le support 140 est monté et démonté de la périphérie interne de la cloison 138 de façon simple et rapide, comme cela sera décrit plus en détail dans ce qui suit, ce qui permet de faciliter le remplacement des éléments abradables 136 lorsqu'ils sont usés.

Dans l'exemple représenté, le support 140 a en section une forme en U ou en C dont l'ouverture débouche radialement vers l'extérieur. Le support 140 comporte deux ailes annulaires 152 sensiblement radiales, respectivement amont et aval. Ces ailes 152 sont sensiblement parallèles entre elles et reliées entre elles à leurs périphéries internes par une paroi annulaire interne 151 sensiblement cylindrique. Des éléments 136 en matériau abradable sont fixés, par exemple par brasage, sur la surface interne de cette paroi cylindrique interne 151, et des déflecteurs annulaires 142 en tôle sont également fixés par brasage sur les ailes 152.

Chaque aile 152 est pliée à sa périphérie externe de manière à former une paroi annulaire externe 154 sensiblement cylindrique s'étendant axialement vers l'autre aile. Ces parois cylindriques externes 154 sont elles-mêmes pliées à leurs extrémités axiales situées du côte de l'ouverture de la gorge 150 pour former des rebords annulaires 156 s'étendant sensiblement radialement vers l'intérieur, dans la gorge 150 du support. La périphérie interne de chaque rebord annulaire 156 est à distance radiale de la paroi interne 151, la dimension radiale des rebords 156 étant par exemple sensiblement égale à la moitié de celle des ailes 152.

Ces rebords 156 sont sensiblement parallèles entre eux et à la cloison 138. Ils définissent ici l'ouverture de la gorge 150 du support 140. La distance axiale entre les faces en regard des rebords annulaires 156 est inférieure à l'épaisseur de la cloison 138 de façon à ce que, en position de montage, la cloison soit maintenue axialement serrée entre les rebords 156 du support 140.

La cloison 138 du distributeur 112 a dans l'exemple représenté une section en T renversé et comprend à sa périphérie interne des épaulements circonférentiels 158 destinés à être logés dans la gorge 150 du support, et à coopérer par butée avec les rebords annulaires 156 et la paroi interne 151 du support pour immobiliser en direction radiale et axiale le support 140 sur la cloison 138.

La largeur des épaulements 158 en direction axiale est déterminée de façon à ce que les bords périphériques internes des rebords annulaires 156 soient en appui radial vers l'intérieur sur les surfaces annulaires externes de ces épaulements. L'épaisseur des épaulements 158 en direction radiale est déterminée de façon à ce que ces épaulements soient insérés avec un serrage radial entre la surface externe de la paroi interne 151 et les bords périphériques internes des rebords 156.

Les épaulements 158 peuvent avoir une étendue angulaire égale ou inférieure à celle du secteur de distributeur. Le secteur de distributeur 112 peut comprendre de chaque côté du secteur de cloison 138 plusieurs épaulements 158 à distance circonférentielle les uns des autres.

Chaque secteur de support 140 comporte une extrémité circonférentielle ouverte (figure 5) pour l'engagement et le montage sur un nombre donné de secteurs de distributeur (trois dans l'exemple représenté), et une extrémité circonférentielle opposée qui est fermée (figure 6) pour retenir le secteur de support dans un sens en direction circonférentielle sur les secteurs de distributeur.

Dans l'exemple représenté en figure 6, l'extrémité circonférentielle du secteur de support a été fermée par fixation, par exemple par brasage ou soudage, d'une plaque 160 sur cette extrémité circonférentielle. Cette plaque 160 forme un moyen de retenue sur les secteurs de distributeur 112 en direction circonférentielle. La plaque 160 vient en appui circonférentiel dans un sens sur le secteur de cloison 138 du secteur de distributeur 112 adjacent à cette plaque (figure 6). Cette plaque 160 est bloquée circonférentiellement dans le sens opposé par appui sur le secteur de cloison 138 d'un autre secteur de distributeur sur lequel est monté un secteur de support adjacent.

Dans les figures 4 à 6, on peut voir que les fentes 148 formées sur les bords radiaux du secteur de cloison 138 sont plus courtes que celles de la technique antérieure et sont donc plus rapides à réaliser.

Le support annulaire 140 est accroché sur les secteurs de distributeur 112 de la façon suivante. Trois secteurs de distributeur 112 sont disposés bout à bout. Un secteur de support 140 est disposé à côté d'un des secteurs de distributeur 112 de sorte que son extrémité circonférentielle ouverte soit alignée en direction circonférentielle avec les épaulements 158 du secteur de cloison 138 de ce secteur de distributeur. Le secteur de support 140 est alors déplacé en direction circonférentielle par rapport aux secteurs de distributeur 112 de façon à ce que les épaulements 158 des secteurs de distributeur pénètrent dans la gorge 150 du secteur de support, en s'insérant entre les bords périphériques internes des rebords annulaires 156 du secteur de support et la paroi cylindrique interne 151 du secteur de support, et que les secteurs de cloison 138 s'engagent entre les rebords annulaires 156 du secteur de support. Cela se traduit par un léger écartement axial des rebords annulaires 156 l'un de l'autre. Le secteur de support 140 est déplacé par coulissement circonférentiel sur les secteurs de cloison 138 jusqu'à ce que sa plaque 160 vienne en butée sur un des secteurs de distributeur 112. Ces opérations sont répétées pour chaque secteur de support (au nombre de six dans l'exemple décrit) puis tous les secteurs de distributeur sur lesquels sont accrochés les secteurs de support sont disposés à plat et bout à bout de façon à former le distributeur. Un outil approprié est alors utilisé pour saisir l'ensemble du distributeur et le monter directement sur le carter de la turbine. Les opérations précitées sont réalisées en ordre contraire pour le démontage du distributeur, et pour le remplacement du support 140 ou d'un secteur de support selon l'invention.

## Revendications

1. Distributeur sectorisé (112) pour une turbomachine, formé de secteurs comprenant deux plates-formes annulaires coaxiales, respectivement interne (130) et externe, reliées entre elles par des pales (114) sensiblement radiales, la plate-forme interne étant solidaire d'une cloison annulaire (138) sensiblement radiale portant des éléments (136) en matériau abradable, **caractérisé en ce que** les éléments en matériau abradable sont fixés sur un support annulaire (140) sectorisé qui comporte une gorge annulaire (150) débouchant radialement vers l'extérieur et dans laquelle est engagée et retenue en direction radiale la périphérie interne de la cloison annulaire, chaque secteur de support comportant à une de ses extrémités circonférentielles une ouverture d'engagement et de montage sur la cloison annulaire d'un ou de plusieurs secteurs de distributeur, le montage étant réalisé en déplaçant en direction circonférentielle le secteur de support sur cette cloison, et à l'autre de ses extrémités circonférentielles des moyens (160) formant butée en direction circonférentielle et coopérant avec la cloison annulaire du ou d'un des secteurs de distributeur pour assurer la retenue dans un sens en direction circonférentielle de la cloison annulaire par rapport au secteur de support.

2. Distributeur sectorisé selon la revendication 1, **caractérisé en ce que** le support (140) est en forme de rail et est réalisé en tôle.

3. Distributeur sectorisé selon la revendication 2, **caractérisé en ce que** le support (140) a en section une forme en U ou en C dont l'ouverture est orientée radialement vers l'extérieur, ce support comportant deux ailes annulaires (152) sensiblement radiales, respectivement amont et aval, reliées entre elles à leurs périphéries internes par une paroi cylindrique interne (151) de support des éléments (136) en matériau abradable.

4. Distributeur sectorisé selon la revendication 3, **caractérisé en ce que** des déflecteurs annulaires (142) en tôle sont fixés, par exemple par brasage, sur les ailes (152) du support (140).

5. Distributeur sectorisé selon la revendication 3 ou 4, **caractérisé en ce que** chaque aile (152) du support (140) est pliée à sa périphérie externe pour former une paroi externe (154) sensiblement cylindrique s'étendant axialement vers l'aile opposée, ces parois externes définissant entre elles la gorge annulaire (150) de passage de la cloison annulaire (138) d'un secteur de distributeur.

6. Distributeur sectorisé selon la revendication 5, **caractérisé en ce que** chaque paroi externe (154) du support (140) est pliée du côté de la cloison annulaire (138) pour former un rebord annulaire (156) s'étendant sensiblement radialement vers l'intérieur, les deux rebords annulaires étant sensiblement parallèles entre eux et à la cloison annulaire.

7. Distributeur sectorisé selon la revendication 5 ou 6, **caractérisé en ce que**, en position de montage, la périphérie interne de la cloison (138) est serrée entre les parois externes (154) ou entre les rebords annulaires (156) du support (140).

8. Distributeur sectorisé selon l'une des revendications 5 à 7, **caractérisé en ce que**, en position de montage, la périphérie interne de la cloison (138) est radialement serrée entre les parois externes (154) ou les rebords annulaires (156) du support (140) d'une part, et la paroi interne (151) du support d'autre part.

9. Distributeur sectorisé selon l'une des revendications 5 à 8, **caractérisé en ce que** la cloison (138) comprend à sa périphérie interne des épaulements circonférentiels (158) formant butée en direction radiale, ces épaulements étant logés entre les ailes (152) du support et coopérant avec les parois externes (154) ou les rebords annulaires (156) du support pour assurer la retenue radiale du support (140) sur la cloison.

10. Distributeur sectorisé selon l'une des revendications précédentes, **caractérisé en ce que** le nombre de secteurs de support (140) est inférieur au nombre de secteurs de distributeur (112).

11. Distributeur sectorisé selon l'une des revendications précédentes, **caractérisé en ce que** chaque secteur de support (140) s'étend en direction circonférentielle sur une étendue angulaire correspondant à plusieurs secteurs de distributeur (112).

12. Turbine basse-pression de turbomachine, **caractérisée en ce qu'**elle comprend au moins un distributeur sectorisé (112) selon l'une des revendications précédentes.

13. Turbomachine, telle qu'un turboréacteur ou un turbopropulseur d'avion, **caractérisée en ce qu'**elle comprend au moins un distributeur sectorisé (112) selon l'une des revendications 1 à 11.

## Patentansprüche

1. Segmentierter Leitapparat (112) für eine Turbomaschine bzw. ein Turbinentriebwerk, der aus Segmenten mit zwei koaxial verlaufenden, ringförmigen Plattformen, nämlich einer inneren (130) und einer äußeren, gebildet ist, die über im Wesentlichen radial verlaufende Schaufeln (114) miteinander verbunden sind, wobei die innere Plattform fest mit einer ringförmigen Zwischenwand (138) verbunden ist, die im Wesentlichen radial verläuft und Elemente (136) aus Abriebmaterial trägt, **dadurch gekennzeichnet, dass** die Elemente aus Abriebmaterial an einen segmentierten, ringförmigen Träger (140) befestigt sind, welcher eine ringförmige Nut (150) aufweist, die radial nach außen ausmündet und in welche der Innenumfang der ringförmigen Wand eingreift und in radialer Richtung gehalten wird, wobei jedes Trägersegment an einem seiner Umfangsenden eine Öffnung zum Eingriff und Anbringen an die ringförmige Zwischenwand von einem oder von mehreren Segmenten des Leitapparats aufweist, wobei das Anbringen dadurch erfolgt, dass das Trägersegment an dieser Zwischenwand in Umfangsrichtung verlagert wird, und an dem anderen seiner Umfangsenden Mittel (160) enthält, die in Umfangsrichtung einen Anschlag bilden und mit der ringförmigen Zwischenwand des bzw. eines der Segmente des Leitapparats zusammenwirken, um den Halt der ringförmigen Zwischenwand in einer Umfangsrichtung bezüglich des Trägersegments zu gewährleisten.

2. Segmentierter Leitapparat nach Anspruch 1, **dadurch gekennzeichnet, dass** der Träger (140) schienenförmig ausgebildet und aus Blech hergestellt ist.

3. Segmentierter Leitapparat nach Anspruch 2, **dadurch gekennzeichnet, dass** der Träger (140) im Querschnitt eine U-Form oder eine C-Form aufweist, deren Öffnung radial nach außen gerichtet ist, wobei dieser Träger zwei im Wesentlichen radial verlaufende, ringförmige Flügel (152) aufweist, nämlich einen stromaufwärtigen und einen stromabwärtigen, die an ihren Innenumfängen über eine zylindrische Innenwand (151) zum Abstützen der Elemente (136) aus Abriebmaterial miteinander verbunden sind.

4. Segmentierter Leitapparat nach Anspruch 3, **dadurch gekennzeichnet, dass** ringförmige Abweiser (142) aus Blech beispielsweise durch Anlöten an die Flügel (152) des Trägers (140) befestigt sind.

5. Segmentierter Leitapparat nach Anspruch 3 oder 4, **dadurch gekennzeichnet, dass** jeder Flügel (152) des Trägers (140) an seinem Außenumfang umgebogen ist, um eine im Wesentlichen zylindrische Außenwand (154) zu bilden, die sich axial zum entgegengesetzten Flügel erstreckt, wobei diese Außenwände die ringförmige Nut (150) für den Durchtritt der ringförmigen Zwischenwand (138) eines Leitapparat-Segments miteinander definieren.

6. Segmentierter Leitapparat nach Anspruch 5, **dadurch gekennzeichnet, dass** jede Außenwand (154) des Trägers (140) auf der Seite der ringförmigen Zwischenwand (138) umgebogen ist, um eine ringförmige Randleiste (156) zu bilden, die sich im Wesentlichen radial nach innen erstreckt, wobei die beiden ringförmigen Randleisten im Wesentlichen parallel zueinander und zur ringförmigen Zwischenwand verlaufen.

7. Segmentierter Leitapparat nach Anspruch 5 oder 6, **dadurch gekennzeichnet, dass** in montierter Stellung der Innenumfang der Zwischenwand (138) zwischen den Außenwänden (154) oder zwischen den ringförmigen Randleisten (156) des Trägers (140) verspannt ist.

8. Segmentierter Leitapparat nach einem der Ansprüche 5 bis 7, **dadurch gekennzeichnet, dass** in montierter Stellung der Innenumfang der Zwischenwand (138) radial zwischen den Außenwänden (154) oder zwischen den ringförmigen Randleisten (156) des Trägers (140) einerseits und der Innenwand (151) des Trägers andererseits verspannt ist.

9. Segmentierter Leitapparat nach einem der Ansprüche 5 bis 8, **dadurch gekennzeichnet, dass** die Zwischenwand (138) an ihrem Innenumfang Umfangsschultern (158) aufweist, die in radialer Richtung einen Anschlag bilden, wobei diese Schultern zwischen den Flügeln (152) des Trägers aufgenommen sind und mit den Außenwänden (154) oder den ringförmigen Randleisten (156) des Trägers zusammenwirken, um den radialen Halt des Trägers (140) an der Zwischenwand zu gewährleisten.

10. Segmentierter Leitapparat nach einem der vorangehenden Ansprüche, **dadurch gekennzeichnet, dass** die Anzahl von Segmenten des Trägers (140) geringer ist als die Anzahl von Segmenten des Leitapparats (112).

11. Segmentierter Leitapparat nach einem der vorangehenden Ansprüche, **dadurch gekennzeichnet, dass** jedes Segment des Trägers (140) sich in Umfangsrichtung über ein Winkelmaß erstreckt, das mehreren Segmenten des Leitapparats (112) entspricht.

12. Niederdruckturbine für eine Turbomaschine bzw. ein Turbinentriebwerk, **dadurch gekennzeichnet, dass** sie zumindest einen segmentierten Leitapparat (112) nach einem der vorangehenden Ansprüche aufweist.

13. Turbomaschine bzw. Turbotriebwerk, wie etwa Turbostrahltriebwerk oder Turbopropellertriebwerk für Flugzeuge, **dadurch gekennzeichnet, dass** sie bzw. es zumindest einen segmentierten Leitapparat (112) nach einem der Ansprüche 1 bis 11 aufweist.

## Claims

1. Sectored distributor (112) for a turbomachine, formed of segments comprising two coaxial annular platforms, respectively inner (130) and outer, connected together by substantially radial blades (114), the inner platform being integral with a substantially radial annular partition (138) carrying members (136) made of abradable material, **characterized in that** the members made of abradable material are fixed on a sectored annular mounting (140) which comprises an annular groove (150) exiting radially towards the exterior and wherein is engaged and retained in the radial direction the inner periphery of the annular partition, each mounting segment comprising at one of its circumferential ends an opening for engaging and mounting on the annular partition of one or several distributor segments, the mounting being carried out by displacing in the circumferential direction the mounting segment on this partition, and at the other of its circumferential ends means (160) forming a stop in the circumferential direction and engaging with the annular partition of the or of one of the distributor segments in order to provide for the restraining in one direction in the circumferential direction of the annular partition in relation to the mounting segment.

2. Sectored distributor according to claim 1, **characterized in that** the mounting (140) is in the form of a rail and is made from sheet metal.

3. Sectored distributor according to claim 2, **characterized in that** the mounting (140) has a U- or C-shaped section of which the opening is oriented radially towards the exterior, this mounting comprising two substantially radial annular wings (152), respectively upstream and downstream, connected together at their inner peripheries by an inner cylindrical mounting wall (151) of the members (136) made of abradable material.

4. Sectored distributor according to claim 3, **characterized in that** annular deflectors (142) made of sheet metal are fixed, for example by brazing, on the wings (152) of the mounting (140).

5. Sectored distributor according to claim 3 or 4, **characterized in that** each wing (152) of the mounting (140) is folded at its outer periphery in order to form a substantially cylindrical outer wall (154) extending axially towards the opposite wing, these outer walls defining between them the annular groove (150) of passage of the annular partition (138) of a distributor segment.

6. Sectored distributor according to claim 5, **characterized in that** each outer wall (154) of the mounting (140) is folded on the side of the annular partition (138) in order to form an annular edge (156) extending substantially radially towards the interior, the two annular edges being substantially parallel together and to the annular partition.

7. Sectored distributor according to claim 5 or 6, **characterized in that**, in mounting position, the inner periphery of the partition (138) is clamped between the outer walls (154) or between the annular edges (156) of the mounting (140).

8. Sectored distributor according to one of claims 5 to 7, **characterized in that**, in mounting position, the inner periphery of the partition (138) is radially clamped between the outer walls (154) or the annular edges (156) of the mounting (140) on the one hand, and the inner wall (151) of the mounting on the other hand.

9. Sectored distributor according to one of claims 5 to 8, **characterized in that** the partition (138) comprises at its inner periphery circumferential shoulders (158) forming a stop in the radial direction, these shoulders being housed between the wings (152) of the mounting and engaging with the outer walls (154) or the annular edges (156) of the mounting in order to provide the radial restraining of the mounting (140) on the partition.

10. Sectored distributor according to one of the preceding claims, **characterized in that** the number of mounting segments (140) is less than the number of distributor segments (112).

11. Sectored distributor according to one of the preceding claims, **characterized in that** each mounting segment (140) extends in the circumferential direction over an angular area corresponding to several distributor segments (112).

12. Turbomachine low-pressure turbine, **characterized in that** it comprises at least one sectored distributor (112) according to one of the preceding claims.

13. Turbomachine, such as a turbojet or a turboprop engine, **characterized in that** it comprises at least one sectored distributor (112) according to one of the claims 1 to 11.
